# EUROPÄISCHE PATENTSCHRIFT

(11) **EP 2 177 329 B1**
(45) Veröffentlichungstag und Bekanntmachung des Hinweises auf die Patenterteilung: **18.04.2012**
(21) Anmeldenummer: 09171882.5
(22) Anmeldetag: 30.09.2009
(51) Int. Cl.: B26D 7/00, B32B 17/10, C03B 33/07, B26D 5/02, B26D 1/04

(54) **Vorrichtung und Verfahren zum Entfernen von Folienüberstand an einer Glaskante einer Verbundsicherheitsglastafel**
Method and device for removing film overhang on a glass edge of a compound glass safety screen
Dispositif et procédé de suppression d'un dépassement de feuille sur un rebord en verre d'un tableau de sécurité composite

(30) Priorität: 20.10.2008 DE 102008052319
(43) Veröffentlichungstag der Anmeldung: 21.04.2010
(60) Teilanmeldung: 11170736.0
(73) Patentinhaber: HEGLA GmbH & Co. KG, 37688 Beverungen (DE)
(72) Erfinder: Vollbracht, Manfred, 37688 Beverungen (DE); Rotermund, Christian, 37671 Höxter (DE)
(74) Vertreter: Solf, Alexander

(56) Entgegenhaltungen:
- EP-A1- 0 270 452
- EP-A2- 2 087 971
- FR-A1- 2 443 409

## Beschreibung

Die Erfindung betrifft eine Vorrichtung und ein Verfahren zum Entfernen von Folienüberstand an einer Glaskante einer Verbundsicherheitsglastafel.

Veröffentlichungen aus diesem Fachgebiet sind beispielsweise die Druckschriften EP 2 087 971 A2, EP 0 270 452 A1, FR 2 443 409 A1 und EP 0 517 176 B2.

Die EP 2 087 971 A2 ist Stand der Technik gemäß Art. 54(3) EPÜ und beschreibt eine Schneidvorrichtung zum Beschneiden eines überstehenden Umfangsabschnitts einer flexiblen Schicht, insbesondere einer flexiblen Zwischenschicht in Mehrschichtaufbauten aus Glas. Des weiteren offenbart die EP 2 087 971 A2, dass die flexiblen Schichten, die insbesondere in Form von Folien zwischen zwei Glasplatten angebracht sein können, durch Entfernen des sich über die Platten hinaus erstreckenden Materials beschnitten werden. Die Schneideinrichtung weist ein Folienschneidmesser auf, welches in einer Richtung oszillierend hin und her bewegbar ist, wobei die Bewegungsrichtung senkrecht oder schräg zur Fläche des Mehrschichtaufbaus verläuft. Im Rahmen des Schneidvorgangs kann die Schneideinrichtung relativ zum Mehrschichtaufbau entlang dessen Umfang bewegt werden.

Die EP 0 270 452 A1 betrifft eine automatische Schneidevorrichtung zum Abschneiden der Randbereiche einer Folie oder Plastikschicht, die sich zwischen zwei Glasplatten befindet und über diese hinausragt.

Die FR 2 443 409 A1 beschreibt eine Vorrichtung zum Beschneiden des Randes einer bewegten Laminatbahn, die eine Trägerschicht und eine Laminatschicht aufweist, die über den Längsrand der Trägerschicht übersteht. Ein Schneidelement schneidet den Randbereich der Laminatschicht, der sich über den Rand der Bahn hinaus erstreckt, ab.

Die EP 0 517 176 B2 betrifft ein Verfahren und eine Vorrichtung zum Vorbereiten von Glasscheiben für eine Mehrfachverglasung mit mindestens einer beschichteten Glasscheibe. Im Rahmen einer solchen Vorbereitung werden in den für den Randverbund der Scheiben vorgesehenen Bereichen die Dünnschichtmaterialien von den beschichteten Scheiben entfernt bzw. abgetragen.

Im Folgenden wird der Einfachheit halber für die Bezeichnung "Verbundsicherheitsglas" die gängige Abkürzung "VSG" verwendet.

VSG-Tafeln im Sinne der Erfindung sind alle Verbundglastafeln, die mindestens eine Verbundfolie aus Kunststoff z. B. aus Polyvinylbutyral (BVB) zwischen zwei Glastafelscheiben aufweisen. Im Wesentlichen sind das Klarglas-Tafeln zur Erzeugung von Klarglasscheiben und Verbundglas-Tafeln zur Erzeugung von Glasabdeckungen (Solarglasscheiben) von Flachkollektoren für Solaranlagen.

Eine VSG-Tafel weist mindestens zwei übereinander angeordnete großformatige Glastafeln auf, zwischen denen eine meist klarsichtige Folie angeordnet ist, die die beiden Glastafeln zusammenhält bzw. miteinander verbindet. Die VSG-Tafeln werden in der Regel auf einen Zuführtisch einer Taktzeit gesteuerten VSG-Schneidanlage verbracht und anschließend auf einem automatisch arbeitenden Schneidtisch der VSG-Schneidanlage in Einzel-VSG-Scheiben durch Ritzen und Brechen aufgeteilt. Wenn das VSG oberflächlich beschichtet ist, wird vor dem Ritzen oder gleichzeitig mit dem Ritzen die Beschichtung in den Aufteilungslinien auf z. B. einem Abschleiftisch randentschichtet (EP 517176 B2).

Die Aufteilungslinien, die in einer VSG-Schneidanlage programmiert gespeichert und mit Steuereinrichtungen auf die Bewegungseinrichtungen der Werkzeuge der Schneidanlage übertragen werden, müssen sehr positionsgenau auf die Oberfläche der VSG-Tafeln aufgebracht werden, damit vorgegebene Abmessungen der aufgeteilten VSG-Scheiben gewährleistet werden können. Zu diesem Zweck sind auf dem Schneidtisch und - sofern vorhanden auch auf dem vorgeordneten Abschleiftisch für eine Längskante und für die in Arbeitsbewegungsrichtung vordere Stirnkante der VSG-Tafel, die als Führungskanten dienen sollen, auf Abstand und in Reihe angeordnete Anschlagelemente bzw. Führungselemente für Glastafelkanten vorgesehen, an denen diese Kanten der VSG-Tafel während der Bearbeitung anliegen können und positionsgenau auch anliegen sollen und geführt werden.

In der Praxis kann das exakte Anliegen aber nur gewährleistet werden, wenn ein sogenannter Folienüberstand an den Führungskanten der VSG-Tafeln so weitgehend entfernt wird, dass er nicht stört und die Führungskanten einer VSG-Tafel an den Führungselementen der Tische genauer anliegen können.

Folienüberstand an den Kanten weisen die VSG-Tafeln herstellungsbedingt auf. Der Überstand ist in der Regel über 1 mm, z. 3. 3 bis 5 mm breit und in der Regel auch noch unregelmäßig breit. Folienüberstände verursachen bei der Weiterverarbeitung auf einer VSG-Schneidanlage Ungenauigkeiten beim Ausrichten z. B. gegen die Anschlagelemente, da das Material der Überstände ungleichmäßig zwischen Anschlagelemente und VSG-Tafelkanten eingeklemmt wird.

Ein unregelmäßiger bzw. ungleichmäßiger und zu breiter Überstand macht demgemäß das exakte Anliegen der Führungskanten einer VSG-Tafel nahezu unmöglich, weshalb der Überstand manuell von einem Bediener mit einem Messer auf eine tolerierbare Breite z. B. auf etwa 1 mm verringert wird, so dass er beim Führen der VSG-Tafel auf den Arbeitstischen an den Anschlagelementen nicht mehr so stark stören kann.

Diese manuelle Arbeit ist jedoch mit einem erheblichen Taktzeitverlust, einer Verletzungsgefahr für den Bediener und mit einer Beschädigungsgefahr für die Glaskanten verbunden. Zudem ist das Schneiden von Hand ungenau bezüglich der Breite des belassenen Überstandes, so dass die gewünschte Anlagegenauigkeit der VSG-Tafelkanten an den Anlage- bzw. Anschlagelementen nicht in ausreichendem Maße gewährleistet werden kann. Außerdem muss darauf geachtet werden, dass die Glaskanten nicht beschädigt werden.

Aufgabe der Erfindung ist, eine in eine Schneidanlage für VSG-Tafeln integrierbare, automatisch arbeitende Vorrichtung und ein Verfahren zum Entfernen störenden Folienüberstandes an VSG-Tafelkanten zu schaffen, die nur mit geringem Taktzeitverlust arbeiten, die Glaskanten der VSG-Tafel nicht beeinträchtigen und vorzugsweise bezüglich der Breite eines tolerierbaren Überstandes einstellbar sind und sehr genau und gleichmäßig arbeiten.

Diese Aufgabe wird erfindungsgemäß durch eine Folienschneidvorrichtung nach Anspruch 1 und ein Verfahren nach Anspruch 21 gelöst. Vorteilhafte Weiterbildungen der Erfindung werden in den jeweiligen Unteransprüchen gekennzeichnet.

Demgemäß betrifft die Erfindung eine Vorrichtung zum Entfernen von Folienüberstand an einer Glaskante einer VSG-Tafel, ausgebildet als ein in eine VSG-Schneidanlage integriertes Folienschneidwerkzeug und aufweisend ein vorzugsweise plattenförmiges Montageelement, an dem ein Folienschneidmesser mit arbeitsseitig vorstehender, sich senkrecht zur zu bearbeitenden Glaskante einer VSG-Tafel erstreckender Schneide angeordnet ist, wobei in einer parallel zur Glaskante verlaufenden Arbeitsrichtung des Folienschneidwerkzeugs hinter der Schneide des Folienschneidmessers nachgeordnet eine Abstandhalterolle am Montageelement angeordnet ist, deren Drehachse parallel zur Schneidenerstreckung des Schneidmessers ausgerichtet ist, wobei die zur Stirnkante der VSG-Tafel weisende bzw. der Stirnkante gegenüberliegende (im Folgenden auch glaskantenseitige Mantellinie oder auch nur Mantellinie genannt) Mantellinie der Abstandhalterolle weiter in Richtung Glaskante der VSG-Tafel vorsteht als die Schneide des Folienschneidmessers.

Die Abstandhalterolle besteht aus Kunststoff oder weist zumindest eine Kunststoffoberfläche auf. Das Folienschneidmesser ist derart versetzbar angeordnet, dass sein Schneidenvorstand bezüglich der glaskantenseitigen Mantellinie der Abstandhalterolle veränderbar ist. In Kombination damit ist zweckmäßigerweise die Abstandhalterolle derart versetzbar angeordnet, dass der Vorstand ihrer glaskantenseitigen Mantellinie relativ zum Schneidenvorstand des Schneidmessers veränderbar ist. Vorteilhaft ist, wenn das Folienschneidmesser und die Abstandhalterolle einheitlich zusammen vor und zurück in Richtung Glaskanne verschiebbar am Montageelement angeordnet sind, vorzugsweise verschiebbar mit einer steuerbaren, sich einendig am Montageelement abstützenden Kolbenzylinderanordnung, die anderendig an einer kombinierten Einrichtung aus Folienschneidmessereinrichtung und Abstandhalterolleneinrichtung, von denen mindestens eine Einrichtung am Montageelement verschieblich sitzt, angreift.

Das Montageelement ist vorzugsweise ein Montageplattenelement mit zwei Längskanten, einer vorderen Stirnkante und einer Hinterkante. Auf der einen der Montageplattenoberflächen sind die Folienschneidwerkzeugeinrichtung und die Abstandhalterolleneinrichtung angeordnet.

Auf der Montageplattenoberfläche des Montageplattenelements ist als Fölienschneidmessereinrichtung ein Tragelement z. B. in Form einer Tragplatte, parallel zu den Längskanten des Montageplattenelements mit Führungselementen zwischen dem Montageplattenelement und der Tragplatte parallel zueinander verschieblich gehaltert. Am vorderen Ende der Tragplatte ist ein Messerträgerblock befestigt, der die vordere Stirnkante des Montageplattenelements überragt und vorderendig das Folienschneidmesser vorzugsweise lösbar befestigt trägt, dessen Schneide parallel zur Stirnkante des Montageplattenelements bzw. senkrecht zu einer zu bearbeitenden Glaskante einer VSG-Tafel verläuft.

Der Messerträgerblock und/oder die Tragplatte stehen mit der Abstandhalterolleneinrichtung in fester Verbindung, zweckmäßigerweise mit einer Rollenträgereinrichtung, die einen Tragarm aufweist, der sich parallel zur Tragplatte erstreckt und mit der Tragplatte zusammen verschiebbar angeordnet ist. Vorderendig trägt der Tragarm z. B. zwischen zwei sich nach vorne erstreckenden Gabelarmen drehbar die Abstandhalterolle, deren Drehachse sich parallel zur Messerschneide des Messers erstreckt und in Arbeitsrichtung des Folienschneidwerkzeugs mit relativ kurzem Abstand von z. B. 3 bis 10 cm direkt hinter dem Messer bzw. der Messerschneide angeordnet ist. Die Abstandhalterolle ist vor und zurück verstellbar bezüglich der Glaskante und damit auch justierbar z. B. zwischen den Gabelarmen angeordnet.

Die oben angegebenen erfindungsgemäßen Merkmale werden durch die Merkmale ergänzt, dass parallel zu den Längskanten des Montageplattenelements sich erstreckend neben der Tragplatte auf dem Montageplattenelement die Kolbenzylinderanordnung angeordnet ist, deren rückwärtiges Ende z. B. an einem auf dem Montageelement festsitzenden Lagerbock befestigt ist, wobei am vorderen Ende der Kolbenzylinderanordnung der Messerträgerblock und/oder die Tragplatte befestigt ist.

Vorteilhaft wie die oben angegebenen erfindungsgemäßen Merkmale ist auch, dass die Vorrichtung in eine VSG-Schneidanlage integriert werden kann, die einen Zuführtisch und zumindest einen Arbeitstisch in Transportrichtung der VSG-Tafel nachgeordnet aufweist, wobei vorzugsweise jeder nachgeordnete Arbeitstisch mit einer Arbeitsbrücke ausgerüstet ist und auf einer seiner Längsseiten sich parallel zur Transportrichtung der VSG-Tafel erstreckende, auf Abstand voneinander angeordnete Anschlagelemente für eine Längskante einer VSG-Tafel und sich senkrecht zur Transportrichtung erstreckende, ebenfalls auf Abstand voneinander angeordnete Anschlagelemente für eine Stirnkante einer VSG-Tafel aufweist. Dabei ist vorteilhaft, wenn das Folienschneidwerkzeug an einer Arbeitsbrücke direkt verfahrbar oder mit einem verfahrbaren Werkzeugträgerschlitten, der das Folienschneidwerkzeug trägt, verfahrbar ist.

Des Weiteren ist zweckmäßig, zwei Folienschneidwerkzeuge in der Schneidanlage integriert anzuordnen, wobei die Schneidanlage mindestens eine Arbeitsbrücke mit mindestens einem daran verfahrbaren Arbeitswerkzeugschlitten aufweise sollte. Dabei ist ebenfalls zweckmäßig, dass ein Folienschneidwerkzeug am - in Transportrichtung der VSG-Tafel betrachtet - vorderen Ende des Zuführtisches jeweils im Bereich einer Längskante des Tisches derart installiert ist, dass eine Längskante einer VSG-Tafel bearbeitet werden kann, während die VSG-Tafel vom Zuführtisch zum nachfolgenden Arbeitstisch transportiert wird und wobei das andere Folienschneidwerkzeug, z. B. ebenfalls im Bereich des vorderen Endes des Zuführtisches an einer Linearführungseinrichtung verfahrbar in Verfahrrichtung der Linearführungseinrichtung und zurück oder an einem an einer Arbeitsbrücke verfahrbaren Arbeitswerkzeug der Schneidanlage sitzt, wobei sich die Linearführungseinrichtung parallel zur Vorderkante des Zuführtisches erstreckt, außerhalb des Transportraumweges der VSG-Tafel angeordnet ist, und an der das Folienschneidwerkzeug mit entsprechenden Antriebsmitteln linear verfahrbar sitzt, so dass der Folienüberstand an der Stirnkante einer ruhenden VSG-Tafel bearbeitbar ist.

Zweckmäßigerweise ist das Folienschneidwerkzeug derart automatisch versetzbar an einer Linearführungseinrichtung angeordnet, dass es aus der Transportraumbahn einer VSG-Tafel verschoben und/oder verschwenkt werden kann.

Das Montageplattenelement ist vorzugsweise senkrecht zur Tischebene des Zuführtisches angeordnet, so dass die Schneide des Schneidmessers und die Mantellinie der Rolle senkrecht zu den zu bearbeitenden Glaskanten einer VSG-Tafel ausgerichtet sind.

Es liegt im Rahmen der Erfindung, die Linearführungseinrichtung für eine erfindungsgemäße Vorrichtung an einer der Arbeitsbrücken eines Arbeitstisches anzuordnen.

Eine besondere Ausführungsform der Erfindung sieht vor, dass am Tragelement tandemartig in Arbeitsrichtung der erfindungsgemäßen Vorrichtung hintereinander hinter der ersten Kombination aus Schneidmesser und Rolle eine weitere Kombination aus Schneidmesser und Rolle angeordnet ist. Dabei ist vorteilhaft, wenn das Schneidmesser der weiteren Kombination an einer entsprechend funktionsgleich aufgebauten Messerträgereinrichtung wie die erste Kombination angeordnet ist. Zweckmäßig ist auch, wenn die Rolle der weiteren Kombination an einer entsprechend funktionsgleich aufgebauten Rollenträgereinrichtung der ersten Kombination angeordnet ist.

Nach der Erfindung fluchten im Betrieb der erfindungsgemäßen Tandem-Vorrichtung vorzugsweise die oben genannten Mantellinien der Rollen der beiden Kombinationen in Arbeitsrichtung des Folienschneidwerkzeugs hintereinander. Dabei ist vorteilhaft, wenn auch die Schneiden der Schneidmesser der Kombinationen in Arbeitsstellung in Arbeitsrichtung hintereinander fluchten.

Anhand der Zeichnung wird die Erfindung im Folgenden beispielhaft näher erläutert. Es zeigen:
- Fig. 1: perspektivisch eine erste Ausführungsform eines er- findungsgemäßen Folienschneidwerkzeugs, angeordnet an einer in eine VSG-Schneidanlage integrierte Linear- führung;
- Fig. 2: schematisch eine Draufsicht auf eine VSG-Schneidan- lage mit der Andeutung der Positionierung von zwei erfindungsgemäßen Folienschneidwerkzeugen.
- Fig. 3: eine Unteransicht auf eine zweite Ausführungsform ei- nes erfindungsgemäßen Folienschneidwerkzeugs.

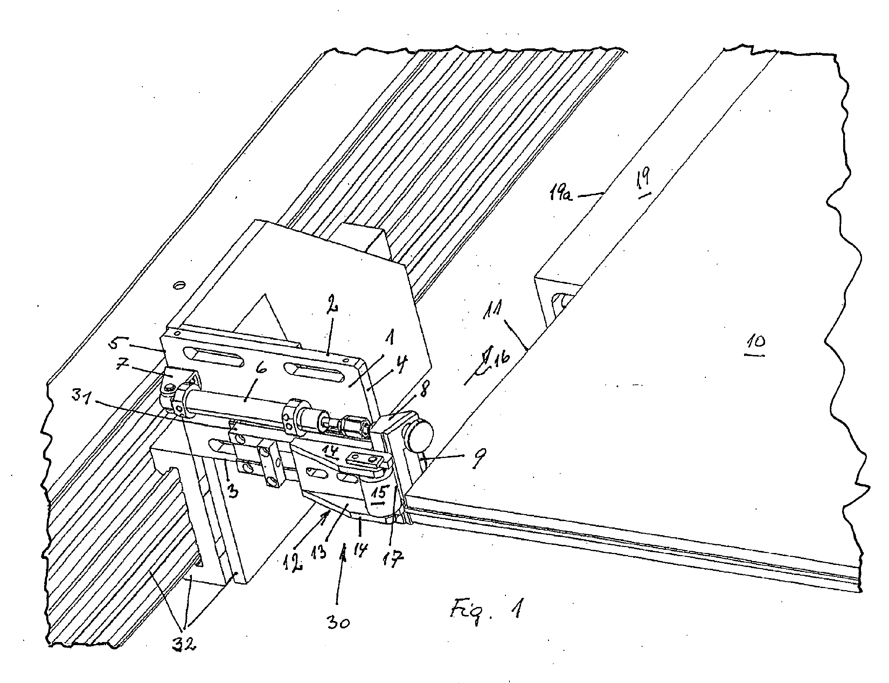

Ein erfindungsgemäßes Folienschneidwerkzeug 30 (Fig. 1) weist als Tragelement zweckmäßigerweise eine z. B. rechteckige Montageplatte 1 z. B. aus Metall auf, auf deren einen Oberfläche die Folienschneidwerkzeugelemente angeordnet sind. Die Montageplatte 1 hat zwei Längskanten 2, 3, eine vordere Stirnkante 4 und eine rückwärtige Kante 5. Parallel zu den Längskanten 2, 3 sich erstreckend ist im Bereich zwischen der Quermitte und einer Längskante 3 der Montageplatte 1 auf deren Oberfläche eine Tragplatte 31 parallel zu den Längskanten 2, 3 mit Linear-Führungselementen (nicht genau dargestellt) zwischen der Montageplatte 1 und der Tragplatte 31 parallel zueinander in Richtung einer zu bearbeitenden Glaskante 11 einer VSG-Tafel 10 verschieblich gehaltert, an deren vorderen Ende ein Messerträger- bzw. Messerhalterblock 8 befestigt ist, der die vordere Stirnkante 4 der Montageplatte 1 überragt und vorderendig ein Folienschneidemesser 9, vorzugsweise lösbar befestigt, trägt, dessen Schneide parallel zur Stirnkante 4 bzw. senkrecht zu der zu bearbeitenden Glaskante 11 einer VSG-Tafel 10 verläuft.

Der Messerträgerblock 8 steht zudem mit einer Rollenträgereinrichtung 12 in fester Vebindung, die einen Tragarm 13 aufweist, der sich parallel zur Tragplatte 31 erstreckt und mit der Tragplatte 31 zusammen verschiebbar ist.

Vorderendseitig trägt der Tragarm 13 z. B. zwischen zwei sich nach vorne erstreckenden Gabelarmen 14 drehbar eine ein Berühren der Glaskante 11 durch die Schneide des Schneidmessers 9 verhindernde Abstandhalterolle 15, deren Drehachse sich parallel zur Messerschneide des Messers 9 erstreckt und in Arbeitsrichtung 16 des Folienschneidwerkzeugs 30 mit relativ kurzem Abstand von z. B. 3 bis 10 cm direkt hinter dem Messer 9 angeordnet ist. Zweckmäßigerweise ist die Abstandhalterollenträgereinrichtung 12 oder die Welle bzw. Drehachse der Abstandhalterolle 15 bezüglich der Glaskante 11 vor und zurück verstellbar bzw. versetzbar und damit auch justierbar z. B. zwischen den Gabelarmen 14 angeordnet.

Erfindungsgemäß ist die Abstandhalterölle 15 derart einstellbar angeordnet, dass ihre glaskantenseitige vordere Mantellinie 17 weiter nach vorne ragt als die Schneide des Folienschneidemessers 9, und zwar derart, dass im Betrieb des Folienschneidwerkzeugs 30 die Rolle 15 auf der zu bearbeitenden VSG-Tafelkante 11 abrollen kann und dabei die Schneide des Folienschneidemessers 9 einen durch die Positionierung des Messers 9 relativ zur Rolle 15 einen vorbestimmten Abstand von der VSG-Tafelkante 11 einhält und ohne Glaskantenberührung schneidet.

Ebenfalls parallel zu den Längskanten 2, 3 sich erstreckend ist im Bereich der Quermitte der Montageplatte 1 neben bzw. oberhalb der Tragplatte 31 auf der Montageplatte 1 eine vorzugsweise pneumatisch betriebene Kolbenzylinderanordnung 6 angeordnet, deren rückwärtiges Ende an einem Lagerbock 7 befestigt ist. Am Kopfende bzw. vorderen Ende der Kolbenzylinderanordnung 6, das die Stirnkante 4 nach vorne überragt, ist der Messerträgerblock 8 befestigt. Wird die Kolbenzylinderanordnung 6 betätigt, kann der Messerträgerblock 8 zusammen mit der Trägerplatte 31 und der Rollenträgereinrichtung 12 parallel zur Montageplatte 1 vor und zurück verschoben und mit pneumatischem Druck die Rolle 15 gegen die Glaskante 11, 11a gepresst werden.

Mit diesen Mitteln kann somit ein unregelmäßiger Folienüberstand 32 auf eine vorbestimmte Breite von z. B. unter 0,2 mm, vorzugsweise 0,1 bis 0,5, insbesondere von 0,3 bis 0,4 mm geschnitten werden, ohne dass die Glaskante einer VSG-Tafel beeinträchtigt wird, wobei eine gleichmäßige Breite eingehalten werden kann. Vorzugsweise besteht zumindest die Mantelfläche der Rolle 15 aus einem Kunststoff, der die Glaskante im Betrieb nicht beschädigen kann, gleichwohl aber das Oberflächenmantelmaterial so eingestellt ist, dass bei einem vorbestimmten Anpressdruck der Rolle 15 gegen eine zu bearbeitende Glaskanne 11 der vorbestimmte Abstand der Schneide des Messers 9 von der Glaskante 11 gewährleistbar ist. Der verbleibende Überstand der Folie von unter 0,2 mm, z. B. 0,1 bis 0,5 mm ist dabei so flexibel und elastisch, dass er von der Rolle beim Überrollen verdrängt und/oder an der Mantelfläche der Rolle Kunststoffmaterimal verdrängen bzw. eindrücken kann, wobei aber jeweils die Rolle auf der Glaskante abrollt und somit den genauen Abstand der Schneide von der Glaskante gewährleistet.

Sofern der Überstand relativ steif ist, kann es ausreichen, wenn die Rolle auf dem Rest-Überstand abrollt, der eine gleichbleibende Breite hat.

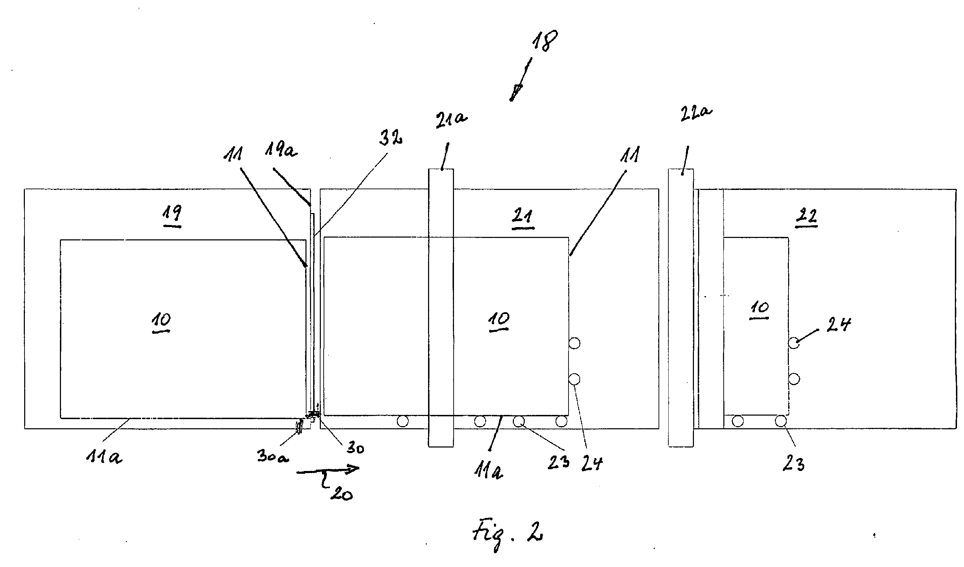

Nach der Erfindung ist zumindest ein erfindungsgemäßes Folienschneidwerkzeug 30 in eine VSG-Schneidanlage 18 integriert (Fig. 2). Eine solche Schneidanlage weist als Arbeitstische in der Regel einen Zuführtisch 19 auf, dem in Transportrichtung 20 der VSG-Tafel 10 ein Abschleiftisch 21 und diesem wiederum ein Schneidtisch 22 nachgeordnet ist. Sofern mit der Schneidanlage nur unbeschichtete VSG-Tafeln 10 bearbeitet werden sollen, ist kein Abschleiftisch 21 vorhanden. Der Abschleiftisch 21 und der Schneidtisch 22 weisen Arbeitsbrücken 21a, 22a mit daran verfahrbaren Arbeitswerkzeugen (nicht dargestellt) und auf einer ihrer Längsseiten sich parallel zur Transportrichtung 20 erstreckende, auf Abstand voneinander angeordnete Anschlagelemente 23 für eine Längskante 11a einer VSG-Tafel 10 sowie sich senkrecht zur Transportrichtung 20 erstreckende, ebenfalls auf Abstand voneinander angeordnete, versenk- oder verschwenkbare Anschlagelemente 24 für eine Stirnkante 11 einer VSG-Tafel 10 auf. Die Arbeitsweise solcher Schneidanlagen ist bekannt und wird deshalb nicht weiter beschrieben.

Zweckmäßigerweise sind in einer Schneidanlage 18 zwei Folienschneidwerkzeuge 30, 30a integriert vorgesehen, und zwar vorzugsweise ein Folienschneidwerkzeug 30a am - in Transportrichtung 20 betrachtet - vorderen Ende des Zuführtisches 19 jeweils im Bereich einer Längskante des Tisches 19 fest derart installiert, dass eine Längskante 11a einer VSG-Tafel 10 bearbeitet werden kann, während die VSG-Tafel 10 vom Zuführtisch 19 zum nachfolgenden Arbeitstisch 21 bzw. 22 transportiert wird. Das andere Folienschneidwerkzeug 30 ist lineargeführt und sitzt z. B. ebenfalls am vorderen Ende des Zuführtisches 19 an einer Linearführung 32 verfahrbar in Verfahrrichtung 16 und zurück, die sich parallel zur Vorderkante 19a des Zuführtisches 19 erstreckt, außerhalb des Transportraumweges der VSG-Tafel 10 angeordnet ist und an der das Folienschneidwerkzeug 30 mit entsprechenden Antriebsmitteln (nicht dargestellt) linear verfahrbar angeordnet ist, so dass die Stirnkante 11 einer ruhenden VSG-Tafel 10 bearbeitbar ist. Zudem ist dieses Folienschneidwerkzeug 30 derart automatisch versetzbar an der Linearführungseinrichtung 32 angeordnet, dass es aus der Transportraumbahn einer VSG-Tafel 10 verschoben und/oder verschwenkt werden kann, so dass der Weitertransport der VSG-Tafel 10 auf den folgenden bzw. nachgeordneten Arbeitstisch 21 oder 22 nicht gestört wird. Es liegt im Rahmen der Erfindung, auch das Folienschneidwerkzeug 30a aus der Transportraumbahn versetzbar und/oder verschwenkbar anzuordnen.

In beiden Fällen der Anordnung der Folienschneidwerkzeuge 30a, 30 ist die Montageplatte 1 senkrecht zur Tischebene des Zuführtisches 19 angeordnet, so dass die Schneide des Schneidmessers 9 und die Mantellinie 17 der Rolle 15 senkrecht zu den zu bearbeitenden Glaskanten 11, 11a einer VSG-Tafel 10 ausgerichtet sind.

Es liegt im Rahmen der Erfindung, die Linearführung 32 an der Arbeitsbrücke 21a oder, wenn kein Abschleiftisch 21 vorgesehen ist, an der Arbeitsbrücke 22a des Schneidtisches anzuordnen oder das Folienwerkzeug 30 an einem an einer Arbeitsbrücke 21a, 22a verfahrbaren ohnehin vorhandenen Arbeitswerkzeug anzuordnen.

Es liegt außerdem im Rahmen der Erfindung, das erfindungsgemäße Folienschneidwerkzeug 30, 30a vorzugsweise samt Linearführung 32 als Nachrüstelemente auszubilden für bereits vorhandene VSG-Schneidanlagen.

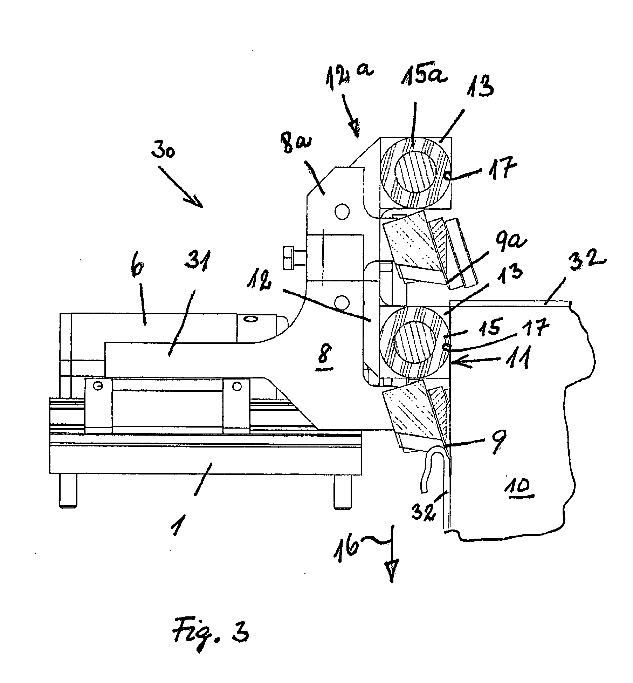

Eine besondere Ausführungsform der Erfindung sieht vor, am Tragelement 31, z. B. der Tragplatte 31, tandemartig in Arbeitsrichtung 16 hintereinander hinter der ersten Kombination aus Schneidmesser 9 und Rolle 15 eine weitere Kombination aus einem Schneidmesser 9a und einer Rolle 15a anzuordnen, und zwar vorzugsweise jeweils an einer entsprechend funktionsgleich aufgebauten Messerträgereinrichtung 8a und einer entsprechend funktionsgleich aufgebauten Rollenträgereinrichtung 12a (Fig. 3).

Mit dieser Ausgestaltung kann gewährleistet werden, dass auch der Überstand 32 an VSG-Tafelecken beschnitten werden kann. Dabei fährt diese Vorrichtung mit der vorderen Kombination des Schneidmessers 9 und der Rolle 15 derart gegen die Kante 11 im Eckbereich der Tafel 10, dass die Kombination aus Schneidmesser 9a und Rolle 15a noch außerhalb der Ecke vor der Tafel 10 positioniert ist (Fig. 3). Die Mantellinie der Rollen 15, 15a und vorzugsweise auch die Schneiden der Schneidmesser 9, 9a fluchten jeweils in Arbeitsrichtung 16 hintereinander, so dass die Rolle 15a den identischen Abstand zur Glaskante gewährleisten kann wie die Rolle 15. Zudem gewährleistet das Schneidmesser 9a den gleichen Restüberstand der Folie. Im Betrieb beginnt das Schneidmesser 9 im Abstand von der Ecke der Glastafel 10 den Überstand 32 zu beschneiden bzw. zu entfernen, wobei ein Überstand 32 der Folie im Eckbereich stehen bleibt (nicht dargestellt), der vom nachfolgenden Schneidmesser 9a beschnitten wird.

Nach einer Ausführungsform der Erfindung (nicht dargestellt) kann die erfindungsgemäße Vorrichtung zum Entfernen von Folienüberstand in eine Schneidanlage 18 integriert werden, die mehrere parallele Schneidlinien aufweist, wobei nur ein Zuführtisch 19 quer zur Transportrichtung 20 verfahrbar vorgesehen ist und somit nur ein Zuführtisch 19 für mehrere Schneidlinien zuständig ist, die dann jeweils lediglich einen Abschleiftisch 21 und/oder einen Schneidtisch 22 aufweisen. Bei dieser Ausführungsform einer Schneidanlage ist lediglich an einer Ecke im Einlaufbereich eines Abschleiftisches 21 oder, sofern kein Abschleiftisch 21 vorhanden ist, im Einlaufbereich an der Ecke eines Schneidtisches 22 eine erfindungsgemäße Abschälvorrichtung derart angeordnet, dass der Überstand der vorderen Stirnkante einer Glastafel beim Querverfahren des Zuführtisches 19 bezüglich der Schneidlinie beschnitten wird. Für das Beschneiden der Längskante der Glastafel befindet sich im bezüglich der Transportrichtung 20 vorderen Eckbereich des Zuführtisches eine weitere erfindungsgemäße Abschälvorrichtung bzw. Vorrichtung zum Beschneiden von Folienüberstand derart, dass beim Einschieben einer Glastafel vom Zuführtisch auf eine der Schneidlinien der Überstand einer Längskante der Glastafel beschnitten wird. Diese Ausführungsform der Erfindung sieht somit lediglich eine Abschälvorrichtung für die Stirnkante an einer der Schneidlinien von mehreren Schneidlinien vor, wobei die andere Abschälvorrichtung am quer verfahrbaren Zuführtisch 19 derart angeordnet ist, dass beim Längstransport einer Glastafel auf eine Schneidlinie eine Längskante der Glastafel beschnitten werden kann.

## Patentansprüche

1. Vorrichtung zum Entfernen von Folienüberstand (32) an einer Glaskante (11, 11a) einer VSG-Tafel (10), ausgebildet als ein in eine VSG-Schneidanlage (18) integriertes Folienschneidwerkzeug (30, 30a), und aufweisend ein vorzugsweise plattenförmiges Montageelement (1), an dem ein Folienschneidmesser (9) mit arbeitsseitig vorstehender, sich senkrecht zur zu bearbeitenden Glaskante (11, 11a) einer VSG-Tafel (10) erstreckender Schneide angeordnet ist, wobei in einer parallel zur Glaskante (11, 11a) verlaufenden Arbeitsrichtung (16) des Folienschneidwerkzeugs (30, 30a) hinter der Schneide des Folienschneidmessers (9) nachgeordnet eine Abstandhalterolle (15) am Montageelement (1) angeordnet ist, deren Drehachse parallel zur Schneidenerstreckung des Folienschneidmessers (9) ausgerichtet ist, wobei die zur VSG-Tafel (10) weisende, glaskantenseitige Mantellinie (17) der Abstandhalterolle (15) weiter in Richtung Glaskante (11, 11a) der VSG-Tafel (10) vorsteht als die Schneide des Folienschneidmessers (9).

2. Vorrichtung nach Anspruch 1,
**dadurch gekennzeichnet,**
**dass** die Abstandhalterolle (15) aus Kunststoff besteht oder zumindest oberflächlich Kunststoff aufweist.

3. Vorrichtung nach Anspruch 1 und/oder 2,
**dadurch gekennzeichnet,**
**dass** das Folienschneidmesser (9) derart versetzbar angeordnet ist, dass sein Schneidenvorstand bezüglich der Mantellinie (17) veränderbar ist.

4. Vorrichtung nach einem oder mehreren der Ansprüche 1 bis 3,
**dadurch gekennzeichnet,**
**dass** die Abstandbalterolle (15) derart versetzbar angeordnet ist, dass der Vorstand ihrer Mantellinie (17) relativ zum Schneidenvorstand veränderbar ist.

5. Vorrichtung nach einem oder mehrere der Ansprüche 1 bis 4,
**dadurch gekennzeichnet,**
**dass** das Folienschneidmesser (9) und die Abstandhalterolle (15) einheitlich zusammen vor und zurück in Richtung Glaskante (11, 11a) verschiebbar am Montageelement (1) angeordnet sind, vorzugsweise verschiebbar mit einer steuerbaren, sich einendig am Montageelement (1) abstützenden Kolbenzylinderanordnung (6), die anderendig an der kombinierten Einrichtung aus Folienschneidmessereinrichtung und Abstandhalterolleneinrichtung, von denen mindestens eine Einrichtung am Montageelement (1) verschieblich sitzt, angreift.

6. Vorrichtung nach Anspruch 5,
**dadurch gekennzeichnet,**
**dass** das Montageelement (1) ein Montageplattenelement mit zwei Längskanten (2, 3), einer vorderen Stirnkante (4) und einer Hinterkante (5) ist, auf deren einen Montageoberfläche die Folienschneidwerkzeugeinrichtung und die Abstandhalterolleneinrichtung angeordnet sind.

7. Vorrichtung nach Anspruch 6,
**dadurch gekennzeichnet,**
**dass** auf der Montageoberfläche des Montageplattenelements (1) als Folienschneidmessereinrichtung ein Tragelement, z. B. in Form einer Tragplatte (31) parallel zu den Längskan-, ten (2, 3) mit Führungselementen zwischen dem Montageplattenelement (1) und der Tragplatte (31) parallel zueinander verschieblich gehaltert ist, an deren vorderen Ende ein Messerträgerblock (8) befestigt ist, der die vordere Stirnkante (4) des Montageplattenelementes (1) überragt und vorderendig das Folienschneidmesser (9) vorzugsweise lösbar befestigt trägt, dessen Schneide parallel zur Stirnkante (4) bzw. senkrecht zu einer zu bearbeitenden Glaskante (11) einer VSG-Tafel (10) verläuft.

8. Vorrichtung nach Anspruch 7,
**dadurch gekennzeichnet,**
**dass** der Messerträgerblock (8) und/oder die Tragplatte (31) mit der Abstandlialterolleneinrichtung in fester Verbindung stehen, zweckmäßigerweise mit einer Rollenträgereinrichtung (12), die einen Tragarm (13) aufweist, der sich parallel zur Tragplatte (31) erstreckt und mit der Tragplatte (31) zusammen verschiebbar angeordnet ist und der vorderendseitig, z. B. zwischen zwei sich nach vorne erstreckenden Gabelarmen (14), drehbar die Abstandhalterolle (15) trägt, deren Drehachse sich parallel zur Messerschneide des Messers (9) erstreckt und in Arbeitsrichtung des Folienschneidwerkzeugs (30, 30a) mit relativ kurzem Abstand von z. B. 3 bis 10 cm direkt hinter dem Messer (9) angeordnet ist.

9. Vorrichtung nach Anspruch 8,
**dadurch gekennzeichnet,**
**dass** die Abstandhalterolle (15) vor und zurück verstellbar in Richtung Glaskante (11, 11a) und damit auch justierbar z. B. zwischen den Gabelarmen (14) angeordnet ist.

10. Vorrichtung nach einem oder mehreren der Ansprüche 6 bis 9,
**dadurch gekennzeichnet,**
**dass** parallel zu den Längskanten (2, 3) sich erstreckend neben der Tragplatte (31) auf dem Montageplattenelement (1) die Kolbenzylinderanordnung (6) angeordnet ist, deren rückwärtiges Ende an einem auf dem Montageelement (1) festsitzenden Lagerbock (7) befestigt ist, wobei am vorderen Ende der Kolbenzylinderanordnung (6) der Messerträgerblock (8) und/oder die Tragplatte (31) befestigt ist.

11. Vorrichtung nach einem oder mehreren der Ansprüche 1 bis 10,
**dadurch gekennzeichnet,**
**dass** sie in eine VSG-Schneidanlage (18) integriert ist, die einen Zuführtisch (19) und zumindest einen Arbeitstisch (21, 22) in Transportrichtung (20) der VSG-Tafel (10) nachgeordnet aufweist, wobei jeder nachgeordnete Arbeitstisch (21, 22) mit einer Arbeitsbrücke (21a, 22a) ausgerüstet ist und auf einer seiner Längsseiten sich parallel zur Transportrichtung (20) erstreckende, auf Abstand voneinander angeordnete Anschlagelemente (23) für eine Längskante (11a) einer VSG-Tafel (10) und sich senkrecht zur Transportrichtung (20) erstreckende, ebenfalls auf Abstand voneinander angeordnete Anschlagelemente (24) für eine Stirnkante (11) einer VSG-Tafel (10) aufweist, wobei das Folienschneidwerkzeug an einer Arbeitsbrücke (21a oder 22a) direkt verfahrbar oder über einen verfahrbaren Werkzeugträgerschlitten, der das Folienschneidwerkzeug trägt, verfahrbar ist.

12. Vorrichtung nach Anspruch 11,
**dadurch gekennzeichnet,**
**dass** zwei Folienschneidwerkzeuge (30, 30a) in der mindestens eine Arbeitsbrücke (21a, 22a) mit daran verfahrbaren Arbeitswerkzeugschlitten aufweisenden Schneidanlage (18) integriert angeordnet sind, wobei ein Folienschneidwerkzeug (30a) am - in Transportrichtung (20) betrachtet - vorderen Ende des Zuführtisches (19) jeweils im Bereich einer Längskante des Tisches (19) derart installiert ist, dass eine Längskante (11a) einer VSG-Tafel (10) bearbeitet werden kann, während die VSG-Tafel (10) vom Zuführtisch (19) zum nachfolgenden Arbeitstisch (21 bzw. 22) transportiert wird, und wobei das andere Folienschneidwerkzeug (30), z. B. ebenfalls im Bereich des vorderen Endes des Zuführtisches (19), an einer Linearführungseinrichtung (32) verfahrbar in Verfahrrichtung (16) und zurück oder an einem verfahrbaren Arbeitswerkzeug der Schneidanlage (18) sitzt, wobei sich die Linearführungseinrichtung (32) parallel zur Vorderkante (19a) des Zuführtisches (19) erstreckt, außerhalb des Transportraumweges der VSG-Tafel (10) angeordnet ist und an der das Folienschneidwerkzeug (30) mit entsprechenden Antriebsmitteln linear verfahrbar sitzt, so dass die Stirnkante (11) einer ruhenden VSG-Tafel (10) bearbeitbar ist.

13. Vorrichtung nach Anspruch 12,
**dadurch gekennzeichnet,**
**dass** das Folienschneidwerkzeug (30) derart automatisch versetzbar an der Linearführungseinrichtung (32) angeordnet ist, dass es aus der Transportraumbahn einer VSG-Tafel (10) verschoben und/oder verschwenkt werden kann.

14. Vorrichtung nach einem oder mehreren der Ansprüche 12 und/oder 13,
**dadurch gekennzeichnet,**
**dass** das Montageplattenelement (1) senkrecht zur Tischebene des Zuführtisches (19) angeordnet ist, so dass die Schneide des Schneidmessers (9) und die Mantellinie (17) der Rolle (15) senkrecht zu den zu bearbeitenden Glaskanten (11, 11a) einer VSG-Tafel (10) ausgerichtet sind.

15. Vorrichtung nach einem oder mehreren der Ansprüche 12 bis 14,
**dadurch gekennzeichnet,**
**dass** die Linearführungseinrichtung (32) an einer der Ar beitsbrücken (21a, 22a) der Arbeitstische (21, 22) gangeordnet ist.

16. Vorrichtung nach einem oder mehreren der Ansprüche 1 bis 15,
**dadurch gekennzeichnet,**
**dass** am Tragelement (31) tandemartig in Arbeitsrichtung (16) hintereinander hinter der ersten Kombination aus Schneidmessereirichtung mit Schneidmesser (9) und Rolleneinrichtung mit Rolle (15) eine weitere Kombination aus Schneidmessereinrichtung mit Schneidmesser (9a) und Rolleneinrichtung mit Rolle (15a) angeordnet ist.

17. Vorrichtung nach Anspruch 16,
**dadurch gekennzeichnet,**
**dass** das Schneidmesser (9a) an einer entsprechend funktionsgleich aufgebauten Messerträgereinrichtung (8a) oder dergleichen Messerträgereinrichtung (8) angeordnet ist.

18. Vorrichtung nach Anspruch 16 und/oder 17,
**dadurch gekennzeichnet,**
**dass** die Rolle (15a) an einer entsprechend funktionsgleich aufgebauten Rollenträgereinrichtung (12a) oder dergleichen Rollenträgereinrichtung (12) angeordnet ist.

19. Vorrichtung nach einem oder mehreren der Ansprüche 16 bis 18,
**dadurch gekennzeichnet,**
**dass** im Betrieb der Vorrichtung die Mantellinien (17, 17a) der Rollen (15, 15a) in Arbeitsrichtung (16) hintereinander fluchten.

20. Vorrichtung nach einem oder mehreren der Ansprüche 16 bis 19,
**dadurch gekennzeichnet,**
**dass** die Schneiden der Schneidmesser (9, 9a) in Arbeitsstellung in Arbeitsrichtung (16) hintereinander fluchten.

21. Verfahren zum Entfernen von Folienüberstand an Glaskanten (11, 11a) einer VSG-Tafel (10) in einer VSG-Schneidanlage (18) mit einer Vorrichtung nach einem oder mehreren der Ansprüche 1 bis 20,
**dadurch gekennzeichnet,**
**dass** zunächst bei einer auf einem Zuführtisch (19) der VSG-Schneidanlage (18) ruhenden VSG-Tafel (10) stirnseitig an der Glaskante (11) der Folienüberstand (32) mit einem an einer Linearführungseinrichtung oder einem Arbeitswerkzeug der Schneidanlage (18) angeordneten, automatisch angetriebenen Folieizschneidwerkzeug (30) beschnitten wird, und anschließend mit einem am Zuführtisch (19) der VSG-Schneidanlage (18) oder am Anfang eines dem Zuführtisch (19) nachgeordneten Arbeitstisch (21, 22) fest installierten Folienschneidwerkzeug (30a) der Folienüberstand an der Längskante (11a) der VSG-Tafel (10) beschnitten wird, während die VSG-Tafel (10) zu einem Arbeitstisch (21, 22) transportiert wird oder es wird in umgekehrter Reihenfolge beschnitten.

22. Verfahren nach Anspruch 21,
**dadurch gekennzeichnet,**
**dass** derart geschnitten wird, dass ein Restüberstand unter 0,2 mm, vorzugsweise zwischen 0,1 und 0,5 mm, insbesondere zwischen 0,3 und 0,4 mm, verbleibt.

## Claims

1. Device for removing foil overhang (32) on a glass edge (11, 11a) of a laminated safety glass (LSG) pane (10), configured as a foil cutting tool (30, 30a) incorporated in an LSG cutting plant (18) and having a preferably plate-like mounting element (1) on which a foil cutting knife (9) with a cutting edge which protrudes on the working side and extends perpendicularly with respect to the glass edge (11, 11a) of an LSG pane (10) to be machined is arranged, a spacing roller (15) being arranged on the mounting element (1), behind the cutting edge of the foil cutting knife (9) in a working direction (16) of the foil cutting tool (30, 30a), which working direction (16) extends parallel to the glass edge (11, 11a), and having its axis of rotation directed parallel to the direction of extension of the cutting edge of the foil cutting knife (9), the surface line (17) of the spacing roller (15) situated on the glass edge side and facing the LSG pane (10) protruding further in the direction of the glass edge (11, 11a) of the LSG pane (10) than the cutting edge of the foil cutting knife (9).

2. Device according to Claim 1, **characterized in that** the spacing roller (15) is made of plastic or at least has plastic on its surface.

3. Device according to Claim 1 and/or 2, **characterized in that** the foil cutting knife (9) is arranged displaceably so that the protrusion of its cutting edge with respect to the surface line (17) can be varied.

4. Device according to one or more of Claims 1 to 3, **characterized in that** the spacing roller (15) is arranged displaceably such that the protrusion of its surface line (17) relative to the protrusion of the cutting edge can be varied.

5. Device according to one or more of Claims 1 to 4, **characterized in that** the foil cutting knife (9) and the spacing roller (15) are arranged on the mounting element (1) displaceably together as a unit backwards and forwards in the direction of the glass edge (11, 11a), preferably displaceably together with a controllable piston cylinder arrangement (6) which at one end is supported on the mounting element (1) and which at the other end engages with the combined appliance consisting of the foil cutting knife appliance and spacing roller appliance, at least one appliance of which is displaceably mounted on the mounting element (1).

6. Device according to Claim 5, **characterized in that** the mounting element (1) is a mounting plate element with two longitudinal edges (2, 3), a front end edge (4) and a rear edge (5), on one mounting surface of which the foil cutting tool appliance and the spacing roller appliance are arranged.

7. Device according to Claim 6, **characterized in that** a support element, for example in the form of a support plate (31), is displaceably mounted on the mounting surface of the mounting plate element (1) as a foil cutting knife appliance, parallel to the longitudinal edges (2, 3) with guiding elements between the mounting plate element (1) and the support plate (31) parallel to each other, said support plate having, fastened on its front end, a knife support block (8) which projects beyond the front end edge (4) of the mounting plate element (1) and supports at the front end in a preferably releasably fastened manner the foil cutting knife (9), the cutting edge of which extends parallel to the front edge (4) or perpendicularly with respect to a glass edge (11) of an LSG pane (10) to be machined.

8. Device according to Claim 7, **characterized in that** the knife support block (8) and/or the support plate (31) are firmly connected to the spacing roller appliance, advantageously to a roller support appliance (12) which has a support arm (13) which extends parallel to the support plate (31) and is arranged displaceably together with the support plate (31) and which at the front end side, for example between two forwardly projecting fork arms (14), rotatably supports the spacing roller (15), the axis of rotation of which extends parallel to the knife cutting edge of the knife (9) and is arranged in the working direction of the foil cutting tool (30, 30a) at a relatively small distance of, for example, 3 to 10 cm, directly behind the knife (9).

9. Device according to Claim 8, **characterized in that** the spacing roller (15) is arranged displaceably backwards and forwards in the direction of the glass edge (11, 11a) and thus also adjustably, e.g. between the fork arms (14).

10. Device according to one or more of Claims 6 to 9, **characterized in that** the piston cylinder arrangement (6) is arranged parallel to the longitudinal edges (2, 3), extending next to the support plate (31) on the mounting plate element (1), and has its rear end fastened on a bearing block (7) fixed on the mounting element (1), the knife support block (8) and/or the support plate (31) being fastened on the front end of the piston cylinder arrangement (6).

11. Device according to one of more of Claims 1 to 10, **characterized in that** it is incorporated in an LSG cutting plant (18) which has a feed table (19) and at least one work table (21, 22) arranged downstream in the direction of transportation (20) of the LSG pane (10), each downstream work table (21, 22) being equipped with a work bridge (21a, 22a) and, on one of its longitudinal sides, has stop elements (23) for a longitudinal edge (11a) of an LSG pane (10), which are arranged at a distance from each other and extend parallel to the direction of transportation (20), and stop elements (24) for a front edge (11) of an LSG pane (10), which are also arranged at a distance from each other and extend perpendicularly with respect to the direction of transportation (20), the foil cutting tool being directly movable on a work bridge (21a or 22a) or movable via a tool holder carriage which carries the foil cutting tool.

12. Device according to Claim 11, **characterized in that** two foil cutting tools (30, 30a) are arranged incorporated in the cutting plant (18) which has at least one work bridge (21a, 22a) with work tool carriages movable thereon, a foil cutting tool (30a) being installed on the front end - viewed in the direction of transportation (20) - of the feed table (19) in each case in the region of a longitudinal edge of the table (19) in such a way that a longitudinal edge (11a) of an LSG pane (10) can be machined, while the LSG pane (10) is transported from the feed table (19) to the following work table (21 or 22), and the other foil cutting tool (30) being mounted, e.g. also in the region of the front end of the feed table (19), on a linear guiding appliance (32) movably in the direction of travel (16) and backwards or on a movable work tool of the cutting plant (18), whereby the linear guiding appliance (32) extends parallel to the front edge (19a) of the feed table (19), is arranged outside of the transportation space path of the LSG pane (10) and on which the foil cutting tool (30) with corresponding drive means is mounted in a linearly movable manner, so that the front edge (11) of an LSG pane (10) resting thereon can be machined.

13. Device according to Claim 12, **characterized in that** the foil cutting tool (30) is arranged so as to be automatically displaceable on the linear guiding appliance (32) in such a way that it can be displaced and/or pivoted out of the transportation space path of an LSG pane (10).

14. Device according to one or more of Claims 12 and/or 13, **characterized in that** the mounting plate element (1) is arranged perpendicularly with respect to the table plane of the feed table (19) so that the cutting edge of the cutting knife (9) and the surface line (17) of the roller (15) are directed perpendicularly with respect to the glass edge (11, 11a) of an LSG pane (10) which is to be machined.

15. Device according to one or more of Claims 12 to 14, **characterized in that** the linear guiding appliance (32) is arranged on one of the work bridges (21a, 22a) of the work tables (21, 22).

16. Device according to one or more of Claims 1 to 15, **characterized in that** a further combination consisting of a cutting knife appliance with cutting knife (9a) and roller appliance with roller (15a) is arranged, on the support element (31), behind the first combination consisting of a cutting knife appliance with cutting knife (9) and roller appliance with roller (15) in tandem fashion behind one another in the working direction (16).

17. Device according to Claim 16, **characterized in that** the cutting knife (9a) is arranged on a knife support appliance (8a) designed correspondingly with the same function or the same knife support appliance (8).

18. Device according to Claim 16 and/or 17, **characterized in that** the roller (15a) is arranged on a roller support appliance (12a) designed correspondingly with the same function or the same roller support appliance (12).

19. Device according to one or more of Claims 16 to 18, **characterized in that**, during operation of the device, the surface lines (17, 17a) of the rollers (15, 15a) are aligned behind one other in the working direction (16).

20. Device according to one or more of Claims 16 to 19, **characterized in that** the cutting edges of the cutting knife (9, 9a) in the working position are aligned behind one another in the working direction (16).

21. Method for removing foil overhang on glass edges (11, 11a) of an LSG pane (10) in an LSG cutting plant (18) with a device according to one or more of Claims 1 to 20, **characterized in that** firstly in the case of an LSG pane (10) resting on a feed table (19) of the LSG cutting plant (18) the foil overhang (32) on the front side of the glass edge (11) is cut using an automatically driven foil cutting tool (30) arranged on a linear guiding appliance or a work tool of the cutting plant (18) and then, using a foil cutting tool (30a) installed in a fixed manner on a feed table (19) of the LSG cutting plant (18) or at the start of a work table (21, 22) arranged downstream of the feed table (19), the foil overhang on the longitudinal edge (11a) of the LSG pane (10) is cut, while the LSG pane (10) is transported towards a work table (21, 22), or cutting is performed in the reverse sequence.

22. Method according to Claim 21, **characterized in that** cutting is performed in such a way that the remaining overhang remains below 0.2 mm, preferably between 0.1 and 0.5 mm, and in particular between 0.3 and 0.4 mm.

## Revendications

1. Dispositif de suppression d'un excédent de feuille (32) sur un rebord en verre (11, 11a) d'un panneau de verre de sécurité feuilleté (10), réalisé sous la forme d'un outil de découpe de feuille (30, 30a) intégré dans une installation de découpe de verre de sécurité feuilleté (18) et présentant un élément de montage (1) de préférence en forme de plateau, au niveau duquel est disposé un couteau de découpe de feuille (9) pourvu d'une lame faisant saillie côté travail, s'étendant de manière perpendiculaire par rapport au rebord en verre (11, 11a) à usiner d'un panneau de verre de sécurité feuilleté (10), dans lequel, dans une direction de travail (16) de l'outil de découpe de feuille (30, 30a) s'étendant de manière parallèle par rapport au rebord en verre (11, 11a), un rouleau écarteur (15), au niveau de l'élément de montage (1), est disposé en aval de la lame du couteau de découpe de feuille (9) dont l'axe de rotation est orienté de manière parallèle par rapport à l'extension de la lame du couteau de découpe de feuille (9), dans lequel la génératrice (17) du rouleau écarteur (15) du côté du rebord en verre et orienté vers le panneau de verre de sécurité feuilleté (10), fait saillie en direction du rebord en verre (11, 11a) du panneau de verre de sécurité feuilleté (10) comme la lame du couteau de découpe de feuille (9).

2. Dispositif selon la revendication 1,
**caractérisé en ce que**
le rouleau écarteur (15) est composé d'une matière plastique ou présente au moins en surface une matière plastique.

3. Dispositif selon la/les revendication(s) 1 et/ou 2,
**caractérisé en ce que**
le couteau de découpe de feuille (9) est disposé de manière à pouvoir être décalé de telle manière que la saillie de ses lames peut être modifiée par rapport à la génératrice (17).

4. Dispositif selon l'une quelconque ou plusieurs des revendications 1 à 3,
**caractérisé en ce que**
le rouleau écarteur (15) est disposé de manière à pouvoir être décalé de telle manière que la saillie de sa génératrice (17) peut être modifiée par rapport à la saillie des lames.

5. Dispositif selon l'une quelconque ou plusieurs des revendications 1 à 4,
**caractérisé en ce que**
le couteau de découpe de feuille (9) et le rouleau écarteur (15) sont disposés sur l'élément de montage (1) de manière à pouvoir être coulissés ensembles vers l'avant et vers l'arrière en direction du rebord en verre (11, 11a), de préférence de manière à pouvoir être coulissés avec un ensemble cylindre-piston (6) pouvant être commandé et s'appuyant du côté d'une extrémité sur l'élément de montage (1), lequel ensemble cylindre-piston vient en prise du côté de l'autre extrémité avec le système combiné composé du système de couteau de découpe de feuille et du système de rouleau écarteur, parmi lesquels au moins un système est placé de manière mobile sur l'élément de montage (1).

6. Dispositif selon la revendication 5,
**caractérisé en ce que**
l'élément de montage (1) est un élément de plateau de montage pourvu de deux rebords longitudinaux (2, 3), d'un rebord frontal avant (4) et d'un rebord arrière (5), à la surface duquel sont disposés le système d'outil de découpe de feuille et le système de rouleau écarteur.

7. Dispositif selon la revendication 6,
**caractérisé en ce que**
un élément porteur est fixé sur la surface de montage de l'élément de plateau de montage (1), en tant que système de couteau de découpe de feuille, c'est-à-dire sous la forme d'un plateau porteur (31), de manière à pouvoir être déplacé de manière parallèle par rapport aux rebords longitudinaux (2, 3) pourvus d'éléments de guidage entre l'élément de plateau de montage (1) et le plateau porteur (31), à l'extrémité avant duquel est fixé un bloc porteur de couteau (8), lequel dépasse du rebord frontal (4) avant de l'élément de plateau de montage (1) et supporte de préférence de manière amovible, du côté de l'extrémité avant, le couteau de découpe de feuille (9), dont la lame s'étend de manière parallèle par rapport au rebord frontal (4) ou de manière perpendiculaire par rapport à un rebord en verre (11) d'un panneau de verre de sécurité feuilleté (10) à usiner.

8. Dispositif selon la revendication 7,
**caractérisé en ce que**
le bloc porteur de couteau (8) et/ou le plateau porteur (31) sont solidement fixés au système de rouleau écarteur, de manière avantageuse à un système porteur de rouleau (12), qui présente un bras porteur (13), lequel s'étend de manière parallèle par rapport au plateau porteur (31) et est disposé de manière à pouvoir être coulissé conjointement avec le plateau porteur (31) et qui, du côté de l'extrémité avant, par exemple entre deux parties horizontales de fourche (14) s'étendant vers l'avant, supporte, de manière à pouvoir tourner, le rouleau écarteur (15), dont l'axe de rotation s'étend de manière parallèle par rapport à la lame du couteau (9) et qui est disposé, dans la direction de travail de l'outil de découpe de feuille (30, 30a), directement derrière le couteau (9), à une distance relativement courte comprise par exemple entre 3 et 10 cm.

9. Dispositif selon la revendication 8,
**caractérisé en ce que**
le rouleau écarteur (15) peut être déplacé en avant et en arrière dans la direction du rebord en verre (11, 11a) et est ainsi disposé également de manière à pouvoir être ajusté, par exemple entre les parties horizontales de la fourche (14).

10. Dispositif selon l'une quelconque ou plusieurs des revendications 6 à 9,
**caractérisé en ce que**
l'ensemble cylindre-piston (6), dont l'extrémité arrière est fixée sur un bloc palier (7) se trouvant sur l'élément de montage (1), est disposé de manière parallèle par rapport aux rebords longitudinaux (2, 3), à proximité du plateau porteur (31) sur l'élément de plateau de montage (1), le bloc porteur de couteau (8) et/ou le plateau porteur (31) étant fixé(s) sur l'extrémité avant de l'ensemble cylindre-piston (6).

11. Dispositif selon l'une quelconque ou plusieurs des revendications 1 à 10,
**caractérisé en ce que**
il est intégré dans une installation de découpe de verre de sécurité feuilleté (18), qui présente une table d'alimentation (19) et au moins une table de travail (21, 22) dans la direction de transport (20) en aval du panneau de verre de sécurité feuilleté (10), dans lequel chaque table de travail (21, 22) disposée en aval est équipée d'un pont de travail (21a, 22a) et présente sur un de ses côtés longitudinaux des éléments de butée (23) pour un rebord longitudinal (11a) d'un panneau de verre de sécurité feuilleté (10), disposés à une certaine distance les uns des autres et s'étendant de manière parallèle par rapport à la direction de transport (20), ainsi que des éléments de butée (24) pour un rebord frontal (11) d'un panneau de verre de sécurité feuilleté (10), s'étendant de manière perpendiculaire par rapport à la direction de transport (20), disposés également à une certaine distance les uns des autres, dans lequel l'outil de découpe de feuille peut être déplacé directement sur un pont de travail (21a ou 22a) ou peut être déplacé par l'intermédiaire d'un chariot porteur d'outil déplaçable, lequel supporte l'outil de découpe de feuille.

12. Dispositif selon la revendication 11,
**caractérisé en ce que** deux outils de découpe de feuille (30, 30a) sont disposés de manière intégrée dans l'installation de découpe (18) présentant au moins un pont de travail (21a, 22a) avec des chariots d'outil de travail déplaçables au niveau de ce dernier, dans lequel un outil de découpe de feuille (30a) est installé - par rapport la direction de transport (20) - au niveau de l'extrémité avant de la table d'alimentation (19) respectivement dans la zone d'un rebord longitudinal de la table (19) de telle manière qu'un rebord longitudinal (11a) d'un panneau de verre de sécurité feuilleté (10) peut être usiné, tandis que le panneau de verre de sécurité feuilleté (10) est transporté depuis la table d'alimentation (19) vers la table de travail (21 ou 22) disposée en aval, et dans lequel l'autre outil de découpe de feuille (30) se trouve, par exemple également dans la zone de l'extrémité avant de la table d'alimentation (19) au niveau d'un système de guidage linéaire (32) dans la direction de déplacement (16) ou au niveau d'un outil de travail de l'installation de découpe (18) pouvant être déplacé, dans lequel le système de guidage linéaire (32) s'étend de manière parallèle par rapport au rebord avant (19a) de la table d'alimentation (19), en étant disposé à l'extérieur de la zone du trajet spatial de transport du panneau de verre de sécurité feuilleté (10) et au niveau duquel est placé l'outil de découpe de feuille (30) de manière à pouvoir être déplacé de manière linéaire à l'aide de moyens d'entraînement correspondants, de telle sorte que le rebord frontal (11) d'un panneau de verre de sécurité feuilleté immobile (10) peut être usiné.

13. Dispositif selon la revendication 12,
**caractérisé en ce que** l'outil de découpe de feuille (30) déplaçable de manière automatique est disposé au niveau du système de guidage linéaire (32) de telle sorte qu'il peut être poussé et/ou pivoté hors de la zone de la voie de transport d'un panneau de verre de sécurité feuilleté (10).

14. Dispositif selon l'une quelconque ou plusieurs des revendications 12 et/ou 13,
**caractérisé en ce que**
l'élément de plateau de montage (1) est disposé de manière perpendiculaire par rapport au plan de table de la table d'alimentation (19), de telle sorte que la lame du couteau de découpe (9) et la génératrice (17) du rouleau (15) sont orientées de manière perpendiculaire par rapport aux rebords en verre (11, 11a) d'un panneau de verre de sécurité feuilleté (10) à usiner.

15. Dispositif selon l'une quelconque ou plusieurs des revendications 12 à 14,
**caractérisé en ce que**
le dispositif de guidage linéaire (32) est disposé au niveau de l'un des ponts de travail (21a, 22a) des tables de travail (21, 22).

16. Dispositif selon l'une quelconque ou plusieurs des revendications 1 à 15,
**caractérisé en ce que**
une autre combinaison formée du système de couteau de découpe équipé d'un couteau de découpe (9a) et du système de rouleau équipé d'un rouleau (15a) est disposée au niveau de l'élément porteur (31) à la manière d'un tandem dans la direction de travail (16) derrière la première combinaison formée du système de couteau de découpe équipé d'un couteau de découpe (9) et du système de rouleau équipé d'un rouleau (15).

17. Dispositif selon la revendication 16,
**caractérisé en ce que**
le couteau de découpe (9a) est disposé au niveau d'un système porteur de couteau (8a) conçu de manière identique d'un point de vue fonctionnel ou au niveau d'un système porteur de couteau (8) similaire.

18. Dispositif selon la revendication 16 et/ou 17,
**caractérisé en ce que**
le rouleau (15a) est disposé au niveau d'un système porteur de rouleau (12a) conçu de manière identique d'un point de vue fonctionnel ou au niveau d'un système porteur de rouleau (12) similaire.

19. Dispositif selon l'une quelconque ou plusieurs des revendications 16 à 18,
**caractérisé en ce que**
lors du fonctionnement du dispositif, les génératrices (17, 17a) des rouleaux (15, 15a) s'alignent les unes derrière les autres dans la direction de travail (16).

20. Dispositif selon l'une quelconque ou plusieurs des revendications 16 à 19,
**caractérisé en ce que**
les lames des couteaux de découpe (9, 9a) s'alignent les unes derrière les autres dans une position de travail dans la direction de travail (16).

21. Procédé de suppression d'un excédent de feuille au niveau de rebords en verre (11, 11a) d'un panneau de verre de sécurité feuilleté (10) dans une installation de découpe de verre de sécurité feuilleté (18) comportant un dispositif selon l'une quelconque ou plusieurs des revendications 1 à 20,
**caractérisé en ce que**
tout d'abord dans le cas d'un panneau de verre de sécurité feuilleté (10) se trouvant sur une table d'alimentation (19) de l'installation de découpe de verre de sécurité feuilleté (18), l'excédent de feuille (32) est découpé au niveau du côté frontal au niveau du rebord en verre (11) à l'aide d'un outil de découpe de feuille (30) disposé sur un système de guidage linéaire ou sur un outil de travail de l'installation de découpe (18) et entraîné automatiquement, puis l'excédent de feuille est découpé au niveau du bord longitudinal (11a) du panneau de verre de sécurité feuilleté (10) à l'aide d'un outil de découpe de feuille (30a) fixé sur la table d'alimentation (19) de l'installation de découpe de verre de sécurité feuilleté (18) ou au début d'une table de travail (21, 22) disposée en aval de la table d'alimentation (19), tandis que le panneau de verre de sécurité feuilleté (10) est transporté vers une table de travail (21, 22) et la découpe est effectuée dans un ordre inversé.

22. Procédé selon la revendication 21,
**caractérisé en ce que**
la découpe est effectuée de telle manière que l'excédent reste inférieur à 0,2 mm, reste de préférence compris entre 0,1 et 0,5 mm, en particulier compris entre 0,3 et 0,4.
